# EUROPEAN PATENT SPECIFICATION

(11) **EP 3 044 267 B1**
(45) Date of publication and mention of the grant of the patent: **22.11.2017**
(21) Application number: 14776781.8
(22) Date of filing: 11.09.2014
(51) Int. Cl.: C09D 5/08

(54) **COMPOSITIONS COMPRISING MAGNESIUM OXIDE AND AMINO ACID**
ZUSAMMENSETZUNGEN MIT MAGNESIUMOXID UND AMINOSÄURE
COMPOSITIONS COMPRENANT DE L'OXYDE DE MAGNÉSIUM ET UN ACIDE AMINÉ

(30) Priority: 11.09.2013 US 201314023972
(43) Date of publication of application: 20.07.2016
(73) Proprietor: PRC-Desoto International, Inc., Sylmar, California 91342 (US)
(72) Inventor: MAYO, Michael A., Pittsburgh, Pennsylvania 15239 (US); FURAR, Elizabeth A., Pittsburgh, Pennsylvania 15215 (US); RUSHMAN, Paul, Hexham Northumberland NE46 2LX (GB); BREON, Jonathan P., Pittsburgh, Pennsylvania 15237 (US)
(74) Representative: f & e patent
(86) International application number: PCT/US2014/055122
(87) International publication number: WO 2015/038730

(56) References cited:
- WO-A1-2009/001045
- WO-A2-02/099002
- US-A1- 2005 164 169

## Description

### FIELD OF THE INVENTION

The present invention relates to coating compositions that comprise magnesium oxide ("MgO") particles and an amino acid. The present invention also relates to substrates at least partially coated with a coating deposited from such a composition and multi-component composite coatings, wherein at least one coating layer is deposited from such a coating composition.

### BACKGROUND OF THE INVENTION

Coatings are applied to appliances, automobiles, aircraft, and the like for a number of reasons, typically for corrosion protection and/or enhanced performance. To improve the corrosion resistance of a metal substrate, corrosion inhibitors are typically used in the coatings applied to the substrate. A common corrosion inhibitor is strontium chromate, which provides excellent corrosion resistance for the metal substrates, especially for aluminum substrates. However, corrosion inhibitors such as strontium chromate are highly toxic and carcinogenic, and their use results in the production of waste streams that pose environmental concerns and disposal issues. Coating compositions containing anti-corrosive pigments such as MgO are disclosed in WO 02/099002 A2. Compositions containing, among others, MgO are disclosed in WO 2009/001045 A1 and US 2005/0164169 A1.

As a result, it is desirable to provide a corrosion resistant coating without chromate pigments.

### SUMMARY OF THE INVENTION

The present invention is directed to coating compositions comprising MgO, an amino acid and a film-forming resin. Methods for coating a substrate with such coatings and substrates coated thereby are also within the scope of the present invention.

### DETAILED DESCRIPTION OF THE INVENTION

The present invention is directed to coating compositions comprising MgO, an amino acid and a film-forming resin.

Any MgO of any average particle size can be used according to the present invention. In certain embodiments, the MgO is micron sized, such as 0.5 to 50 microns or 1 to 15 microns, with size based on average particle size. In certain embodiments, the MgO is nano sized, such as 10 to 499 nanometers, or 10 to 100 nanometers, with size based on average particle size. It will be appreciated that these particle sizes refer to the particle size of the MgO at the time of incorporation into the coating. Various coating preparation methods may result in the MgO particles agglomerating, which could increase average particle size, or shearing or other action that can reduce average particle size. MgO is commercially available from a number of sources, such as those listed in the Example section.

For example, certain embodiments of the coating compositions of the present invention comprise ultrafine MgO particles. As used herein, the term "ultrafine" refers to particles that have a B.E.T. specific surface area of at least 10 square meters per gram, such as 30 to 500 square meters per gram, or, in some cases, 80 to 250 square meters per gram. As used herein, the term "B.E.T. specific surface area" refers to a specific surface area determined by nitrogen adsorption according to the ASTMD 3663-78 standard based on the Brunauer-Emmett-Teller method described in the periodical "The Journal of the American Chemical Society", 60, 309 (1938).

In certain embodiments, the coating compositions of the present invention comprise MgO particles having a calculated equivalent spherical diameter of no more than 200 nanometers, such as no more than 100 nanometers, or, in certain embodiments, 5 to 50 nanometers. As will be understood by those skilled in the art, a calculated equivalent spherical diameter can be determined from the B.E.T. specific surface area according to the following equation: Diameter (nanometers)=6000/[BET (m.sup.2/g)*.rho. (grams/cm.sup.3)].

Certain embodiments of the coating compositions of the present invention comprise MgO particles having an average primary particle size of no more than 100 nanometers, such as no more than 50 nanometers, or, in certain embodiments, no more than 25 nanometers, as determined by visually examining a micrograph of a transmission electron microscopy ("TEM") image, measuring the diameter of the particles in the image, and calculating the average primary particle size of the measured particles based on magnification of the TEM image. One of ordinary skill in the art will understand how to prepare such a TEM image and determine the primary particle size based on the magnification. The primary particle size of a particle refers to the smallest diameter sphere that will completely enclose the particle. As used herein, the term "primary particle size" refers to the size of an individual particle as opposed to an agglomeration of two or more individual particles.

In certain embodiments, the MgO particles have an affinity for the medium of the composition sufficient to keep the particles suspended therein. In these embodiments, the affinity of the particles for the medium is greater than the affinity of the particles for each other, thereby reducing or eliminating agglomeration of the particles within the medium.

The shape (or morphology) of the MgO particles can vary. For example, generally spherical morphologies can be used, as well as particles that are cubic, platy, polyhedric, or acicular (elongated or fibrous). In other specific embodiments, the particles may be covered completely in a polymeric gel, not covered at all in a polymeric gel, or covered partially with a polymeric gel. Covered partially with a polymeric gel means that at least some portion of the particle has a polymeric gel deposited thereon, which, for example, may be covalently bonded to the particle or merely associated with the particle.

The amount of MgO used in the present coatings can vary depending on the needs of the user. For example, the present coatings can comprise 1 to 50 weight % MgO particles, such as 5 to 50 or 10 to 40, with weight % based on the total solids, including pigments, of the blended coating. By "blended coating" is meant the coating that is applied to a substrate. For example, in the case of a two component coating, the blended coating refers to the coating that results from the two components being mixed together.

In certain embodiments, other metal oxides may be used in addition to the MgO. Examples include oxides of zinc, cerium, yttrium, manganese, magnesium, molybdenum, lithium, aluminum, magnesium, tin, calcium, boron, phosphorous, silicon, zirconium, iron, and/or titanium. In certain embodiments, the particles comprise silicon dioxide ("silica"). Certain embodiments specifically exclude praseodymium. Still other embodiments specifically exclude all rare earth elements. By rare earth is meant a collection of seventeen chemical elements in the periodic table, specifically the fifteen lanthanoids (the fifteen elements with atomic numbers 57 through 71, from lanthanum to lutetium) plus scandium and yttrium. Other specific embodiments exclude chromium or derivatives thereof, such as a chromium containing material. As used herein, the term "chromium containing material" refers to materials that include a chromium trioxide group, CrO₃. Non-limiting examples of such materials include chromic acid, chromium trioxide, chromic acid anhydride, dichromate salts, such as ammonium dichromate, sodium dichromate, potassium dichromate, and calcium, barium, magnesium, zinc, cadmium, and strontium dichromate. When a coating of the present invention is substantially free or completely free of chromium, this includes chromium in any form including chromium containing materials.

Thus, in certain embodiments, the present coatings are substantially free of one or more rare earth metals in any form, including but not limited to praseodymium oxide, chromium in any form, and/or heavy metal phosphates. In other certain embodiments, the coatings are substantially free of metal salts, such as phosphates. In other embodiments, the coating compositions of the present invention are completely free of any or all of these compounds or materials. As used herein, the term "substantially free" means that the particular material or compound is present in the composition, if at all, as an incidental impurity. In other words, the amount of material is so small that it does not affect the properties of the composition; in the case of chromate or chromium, this may further include that the material is not present in the coatings in such a level that they cause a burden on the environment. This means that, in certain embodiments of the present invention, the coating composition contains less than 2 weight percent of any or all of the above compounds or materials, or, in some cases, less than 0.05 weight percent of any or all of the above compounds or materials, wherein such weight percents are based on the total weight of the composition. As used herein, the term "completely free" means that the material is not present in the composition at all.

The coatings of the present invention further comprise an amino acid. Amino acids will be understood by those skilled in the art as compounds having both acid and amine functionality, with side chains specific to each amino acid. The amino acid may be monomeric or oligomeric, including a dimer. In certain embodiments, when an oligomeric amino acid is used, the molecular weight, as determined by GPC, of the oligomer is less than 1000.

While any of the amino acids can be used according to the present invention, particularly suitable are histidine, arginine, lysine, cysteine, cystine, tryphtophan, methionine, phenylalanine and tyrosine. It will be further understood that amino acids can be either L- or D- enantiomers, which are mirror images of each other, and that the L- configurations are typically found in proteins and nature and as such are widely commercially available. The term "amino acids" as used herein therefore refers to both the D- and L- configurations; in certain embodiments, only the L- or only the D- configuration may be included. Amino acids can be purchased, for example, from Sigma Aldrich, Thermo Fisher Scientific, Hawkins Pharmaceutical, or Ajinomato. Certain embodiments of the present invention specifically exclude the amino acids glycine, arginine, proline, cysteine and/or methionine.

The amino acid can be present in any amount that improves the corrosion resistance of the coating. For example, the amino acids may be present in an amount of 0.1 to 20 wt %, such as 2 to 4 wt %, with wt % based on resin solids in the blended coating. The amount of amino acid and the amount of MgO may be selected together to give the optimum corrosion resistance to a coating.

In certain embodiments, the coating compositions are formulated as a one-component composition where a curing agent (or activator) is admixed with other components of the coating composition to form a storage stable composition. In such an embodiment, the corrosion resisting magnesium oxide particles and amino acid are included in the storage stable composition. Alternatively, the coating compositions of the present invention can be formulated as a two-component coating composition where a curing agent (or activator) is included in an activator component that is added to a pre-formed admixture of the other composition components just prior to application. The corrosion resisting magnesium oxide particles and the amino acid may be present in either or both of the activator component or pre-formed admixture of the two-component composition. In still other embodiments of the present invention, the coating compositions can be formulated as a three-component coating composition, for example, a base component, an activator component, and a thinner component, where the three components are mixed sometime prior to application. The corrosion resisting magnesium oxide particles and the amino acid are present in at least one of the base component, activator component, or thinner component of the three component system. Additionally, the corrosion resisting magnesium oxide particles and the amino acid may be present in at least two of the base component, activator component, or thinner component of the three component system. Further, the corrosion resisting magnesium oxide particles and the amino acid may be present in each of the base component, activator component, and thinner component of the three component system. Multi-component coatings having more than three components are also within the scope of the present invention. For all embodiments having two or more components, the magnesium oxide and the amino acid can be in the same and/or different components.

The coatings of the present invention also include a film-forming resin. As used herein, the term "film-forming resin" refers to resins that can form a self-supporting continuous film on at least a horizontal surface of a substrate upon removal of any diluents or carriers present in the composition or upon curing at ambient conditions or elevated temperature.

Film-forming resins that may be used in the coating compositions of the present invention include, without limitation, those used in aerospace coating compositions, automotive OEM coating compositions, automotive refinish coating compositions, industrial coating compositions, architectural coating compositions, and coil coating compositions, among others. Film-forming resins suitable for use in the coating compositions of the present invention include, for example, resins based on acrylic, saturated or unsaturated polyester, alkyd, polyurethane or polyether, polyvinyl, cellulosic, silicon-based polymers, co-polymers thereof, which resins may contain reactive groups such as epoxy, carboxylic acid, hydroxyl, isocyanate, amide, carbamate, amine and carboxylate groups, among others, including mixtures thereof. Combinations of film-forming resins can be used.

In certain embodiments, the film-forming resin included in the coating compositions of the present invention comprises a thermosetting film-forming resin. As used herein, the term "thermosetting" refers to resins that "set" irreversibly upon curing or crosslinking, wherein the polymer chains of the polymeric components are joined together by covalent bonds. This property is usually associated with a crosslinking reaction of the composition constituents often induced, for example, by heat or radiation. See Hawley, Gessner G., The Condensed Chemical Dictionary, Ninth Edition., page 856; Surface Coatings, vol. 2, Oil and Colour Chemists' Association, Australia, TAFE Educational Books (1974). Curing or crosslinking reactions also may be carried out under ambient conditions. Accordingly, in an embodiment, the present invention is directed to a coating comprising magnesium oxide, amino acid, and a film-forming resin, wherein the coating cures at ambient conditions. By ambient conditions is meant that the coating undergoes a thermosetting reaction without the aid of heat or other energy, for example, without baking in an oven, use of forced air, or the like. Once cured or crosslinked, a thermosetting resin will not melt upon the application of heat and is insoluble in solvents. In other embodiments, the film-forming resin included within the coating compositions of the present invention comprises a thermoplastic resin. As used herein, the term "thermoplastic" refers to resins that comprise polymeric components that are not joined by covalent bonds and thereby can undergo liquid flow upon heating and are soluble in solvents. See Saunders, K. J., Organic Polymer Chemistry, pp. 41-42, Chapman and Hall, London (1973).

In certain embodiments of the present invention, the film-forming resin is present in the coating compositions of the present invention in an amount greater than 10 weight percent, such as 20 to 90 weight percent, or, in some cases, 20 to 50 weight percent, with weight percent being based on the total solid weight of the blended coating composition. When the coating is a thermosetting composition, one or more curing agents are used. If two or more film-forming resins are used, they may be cured by the same and/or different curing agents. The total amount of curing agents in these embodiments may be present in an amount of up to 70 weight percent, such as 10 to 70 weight percent; this weight percent is also based on the total solid weight of the coating composition.

According to embodiments of the present invention, the coating compositions are in the form of liquid coating compositions, examples of which include waterborne (WB) and solvent-borne (SB) coating compositions and electrodepositable coating compositions. The coating compositions of the present invention may also be in the form of a co-reactable solid in particulate form (i.e., a powder coating composition).

When water is used as a diluent, the coating composition may be a waterborne coating composition. In other embodiments, when solvent is used as a diluent, the coating composition may be a solvent borne coating composition. For example, in certain embodiments, the present invention may comprise solvents, such as ketone, acetate, glycol, alcohol and/or aromatic solvents. Exemplary suitable solvents are described in U.S. Patent No. 6,774,168 at column 3, lines 28 to 41, the cited portion of which is incorporated by reference herein.

In certain embodiments, the present coating compositions may include an epoxy functional film-forming resin component and a polyamine activator component. For example, in certain embodiments, the present invention may comprise epoxy resins such as diglycidyl ethers of bisphenol A, bisphenol F, glycerol, novolacs, and the like. Exemplary suitable polyepoxides are described in U.S. Patent No. 4,681,811 at column 5, lines 33 to 58, the cited portion of which is incorporated by reference herein. Additionally, in certain embodiments, the present invention may comprise polyamine curing agents such as aliphatic amine and adducts, cycloaliphatic amines, amidoamines and polyamides. Exemplary suitable polyamines are described in U.S. Patent No. 4,046,729 at column 6, line 61 to column 7, line 26, and in U.S. Patent No. 3,799,854 at column 3, lines 13 to 50, the cited portions of which are incorporated by reference herein. In addition, the above curing reaction may be assisted with a tertiary amine catalyst, such as tris-(dimethylaminomethyl)-phenol.

In certain embodiments, the waterborne or solventborne coating composition is a multi component system including a base component, e.g., the epoxy functional polymer, an activator component, e.g., the polyamine, and optionally a third component, e.g. a thinner component, e.g., water or an aqueous solution. Other ingredients can optionally be contained in any of the components. The three components of the mixture may be combined shortly before application to the substrate. For example, the epoxy functional polymer base component and polyamine activator component, and any other additional components, if used, may be stored separately and mixed just prior to application. In specific embodiments, both the magnesium oxide and amino acid are in the amine component in these multi-component epoxy/amine embodiments,

The coating compositions of the present invention can also comprise any additives standard in the art of coating manufacture including colorants, plasticizers, abrasion-resistant particles, film strengthening particles, flow control agents, thixotropic agents, rheology modifiers, catalysts, antioxidants, biocides, defoamers, surfactants, wetting agents, dispersing aids, adhesion promoters, clays, hindered amine light stabilizers, UV light absorbers and stabilizers, a stabilizing agent, fillers, organic cosolvents, reactive diluents, grind vehicles, and other customary auxiliaries, or combinations thereof. The term "colorant", as used herein is as defined in U.S. Patent Publication No. 2012/0149820, paragraphs 29 to 38, the cited portion of which is incorporated herein by reference.

An "abrasion-resistant particle" is one that, when used in a coating, will impart some level of abrasion resistance to the coating as compared with the same coating lacking the particles. Suitable abrasion-resistant particles include organic and/or inorganic particles. Examples of suitable organic particles include, but are not limited to, diamond particles, such as diamond dust particles, and particles formed from carbide materials; examples of carbide particles include, but are not limited to, titanium carbide, silicon carbide and boron carbide. Examples of suitable inorganic particles, include but are not limited to silica; alumina; alumina silicate; silica alumina; alkali aluminosilicate; borosilicate glass; nitrides including boron nitride and silicon nitride; oxides including titanium dioxide and zinc oxide; quartz; nepheline syenite; zircon such as in the form of zirconium oxide; buddeluyite; and eudialyte. Particles of any size can be used, as can mixtures of different particles and/or different sized particles. For example, the particles can be microparticles, having an average particle size of 0.1 to 50, 0.1 to 20, 1 to 12, 1 to 10, or 3 to 6 microns, or any combination within any of these ranges. The particles can be nanoparticles, having an average particle size of less than 0.1 micron, such as 0.8 to 500, 10 to 100, or 100 to 500 nanometers, or any combination within these ranges.

As used herein, the terms "adhesion promoter" and "adhesion promoting component" refer to any material that, when included in the composition, enhances the adhesion of the coating composition to a metal substrate. In certain embodiments of the present invention, such an adhesion promoting component comprises a free acid. As used herein, the term "free acid" is meant to encompass organic and/or inorganic acids that are included as a separate component of the compositions as opposed to any acids that may be used to form a polymer that may be present in the composition. In certain embodiments, the free acid comprises tannic acid, gallic acid, phosphoric acid, phosphorous acid, citric acid, malonic acid, a derivative thereof, or a mixture thereof. Suitable derivatives include esters, amides, and/or metal complexes of such acids. In certain embodiments, the free acid comprises a phosphoric acid, such as a 100 percent orthophosphoric acid, superphosphoric acid or the aqueous solutions thereof, such as a 70 to 90 percent phosphoric acid solution.

In addition to or in lieu of such free acids, other suitable adhesion promoting components are metal phosphates, organophosphates, and organophosphonates. Suitable organophosphates and organophosphonates include those disclosed in U.S. Patent No. 6,440,580 at column 3, line 24 to column 6, line 22, U.S. Patent No. 5,294,265 at column 1, line 53 to column 2, line 55, and U.S. Patent No. 5,306,526 at column 2, line 15 to column 3, line 8, the cited portions of which are incorporated herein by reference. Suitable metal phosphates include, for example, zinc phosphate, iron phosphate, manganese phosphate, calcium phosphate, magnesium phosphate, cobalt phosphate, zinc-iron phosphate, zinc-manganese phosphate, zinc-calcium phosphate, including the materials described in U.S. Patent Nos. 4,941,930, 5,238,506, and 5,653,790. As noted above, in certain embodiments, phosphates are excluded.

In certain embodiments, the adhesion promoting component comprises a phosphatized epoxy resin. Such resins may comprise the reaction product of one or more epoxy-functional materials and one or more phosphorus-containing materials. Non-limiting examples of such materials, which are suitable for use in the present invention, are disclosed in U.S. Patent No. 6,159,549 at column 3, lines 19 to 62, the cited portion of which is incorporated by reference herein.

In certain embodiments, the present invention may also comprise alkoxysilane adhesion promoting agents, for example, acryloxyalkoxysilanes, such as γ-acryloxypropyltrimethoxysilane and methacrylatoalkoxysilane, such as γ-methacryloxypropyltrimethoxysilane, as well as epoxy-functional silanes, such as γ-glycidoxypropyltrimethoxysilane. Exemplary suitable alkoxysilanes are described in U.S. Patent No. 6,774,168 at column 2, lines 23 to 65, the cited portion of which is incorporated by reference herein.

In certain embodiments, the adhesion promoting component is present in the coating composition in an amount ranging from 0.05 to 20 percent by weight, such as 0.25 to 15 percent by weight, with the percents by weight being based on the total solid weight of the composition.

In certain embodiments, the coating compositions of the present invention may also comprise, in addition to any of the previously described corrosion resisting particles, conventional non-chrome corrosion resisting particles. Suitable conventional non-chrome corrosion resisting particles include, but are not limited to, iron phosphate, zinc phosphate, calcium ion-exchanged silica, colloidal silica, synthetic amorphous silica, and molybdates, such as calcium molybdate, zinc molybdate, barium molybdate, strontium molybdate, and mixtures thereof. Suitable calcium ion-exchanged silica is commercially available from W. R. Grace & Co. as SHIELDEX. AC3 and/or SHIELDEX. C303. Suitable amorphous silica is available from W. R. Grace & Co. as SYLOID. Suitable zinc hydroxyl phosphate is commercially available from Elementis Specialties, Inc. as NALZIN. 2. These conventional non-chrome corrosion resisting pigments typically comprise particles having a particle size of approximately one micron or larger. In certain embodiments, these particles are present in the coating compositions of the present invention in an amount ranging from 5 to 40 percent by weight, such as 10 to 25 percent by weight, with the percents by weight being based on the total solids weight of the composition.

The present coatings may also comprise one or more organic inhibitors. Examples of such inhibitors include but are not limited to sulfur and/or nitrogen containing heterocyclic compounds, examples of which include azoles, thiophene, hydrazine and derivatives, pyrrole and derivatives. Such organic inhibitors are described in U.S. Publication No. 2013/0065985, Paragraph No. 52, which is hereby incorporated by reference. When used, organic inhibitors may be present in the coating compositions in an amount ranging from 0.1 to 20 wt%, such as 0.5 to 10 wt %, with wt % being based on the total solids weight of the blended composition.

As noted above, the coating compositions of the present invention can be liquid coating compositions, examples of which include aqueous or water-based and solvent-based coating compositions and electrodepositable coating compositions, or in the form of a co-reactable solid in particulate form, i.e., a powder coating composition. Regardless of the form, the coating compositions of the present invention may be pigmented or clear, and may be used alone or in combination as primers, basecoats, or topcoats. Certain embodiments of the present invention, as discussion in more detail below, are directed to corrosion resistant primer and/or pretreatment coating compositions. As indicated, certain embodiments of the present invention are directed to metal substrate primer coating compositions, such as "etch primers," and/or metal substrate pretreatment coating compositions. As used herein, the term "primer coating composition" refers to coating compositions from which an undercoating may be deposited onto a substrate. In some industries or substrates, the primer is applied to prepare the surface for application of a protective or decorative coating system. In other industries or substrates, another coating layer is not applied on top of the primer. For example, substrate surfaces that have limited or no external exposure might have a primer with no other layer on top. As used herein, the term "etch primer" refers to primer coating compositions that include an adhesion promoting component, such as a free acid as described in more detail above. As used herein, the term "pretreatment coating composition" refers to coating compositions that can be applied at very low film thickness to a bare substrate to improve corrosion resistance or to increase adhesion of subsequently applied coating layers.

When the coating compositions of the present invention are used as a primer, in some embodiments, a protective and/or decorative coating system may be applied to at least a portion of the primer, such as a monocoat topcoat or a combination of a pigmented base coating composition and a clearcoat composition, i.e., a color-plus-clear system. As a result, the present invention is also directed to multi-component composite coatings comprising at least one coating layer deposited from a coating composition of the present invention. In certain embodiments, the multi-component composite coating compositions of the present invention comprise a base-coat film-forming composition serving as a basecoat (often a pigmented color coat) and a film-forming composition applied over the basecoat serving as a topcoat (often a transparent or clear coat).

In these embodiments of the present invention, the coating composition from which the basecoat and/or topcoat is deposited may comprise, for example, any of the conventional basecoat or topcoat coating compositions known to those skilled in the art of, for example, formulating automotive OEM coating compositions, automotive refinish coating compositions, industrial coating compositions, architectural coating compositions, coil coating compositions, and aerospace coating compositions, among others. Such compositions typically include a film-forming resin that may include, for example, an acrylic polymer, a polyester, and/or a polyurethane. Exemplary film-forming resins are disclosed in U.S. Patent No. 4,220,679, at column 2, line 24 to column 4, line 40; as well as U.S. Patent No. 4,403,003, U.S. Pat. No. 4,147,679 and U.S. Pat. No. 5,071,904 the entire contents of which are incorporated herein by reference.

Metal substrates that may be coated with such compositions include, for example, substrates comprising steel (including electrogalvanized steel, cold rolled steel, hot-dipped galvanized steel, among others), aluminum, aluminum alloys, zinc-aluminum alloys, clad aluminum, and aluminum plated steel. Substrates that may be coated with such compositions also may comprise more than one metal or metal alloy, in that the substrate may be a combination of two or more metal substrates assembled together, such as hot-dipped galvanized steel assembled with aluminum substrates. The substrate can be one that has been already treated in some manner, such as to impart visual and/or color effect, or some performance enhancement such as corrosion resistance.

Accordingly, the present invention is further directed to a substrate coated at least in part with the coating of the present invention. The substrate may comprise part of a vehicle. "Vehicle" is used herein in its broadest sense and includes all types of vehicles, such as but not limited to airplanes, helicopters, cars, trucks, buses, vans, golf carts, motorcycles, bicycles, railroad cars, tanks and the like. It will be appreciated that the portion of the vehicle that is coated according to the present invention may vary depending on why the coating is being used.

The coating compositions of the present invention, which may be, for example, metal substrate primer coating compositions and/or metal substrate pretreatment coating compositions, may be applied to bare metal. By "bare" is meant a virgin material that has not been treated with any pretreatment compositions, such as, for example, conventional phosphating baths, heavy metal rinses, etc. Additionally, bare metal substrates being coated with the coating compositions of the present invention may be a cut edge of a substrate that is otherwise treated and/or coated over the rest of its surface. In certain embodiments, the substrate may be abraded prior to application of the coating and/or pretreatment. "Abraded" means to partially wear away the surface of the substrate by mechanical action. This can be by hand or machine, using abrasive materials such as sandpaper, SCOTCHBRITE pads, or slurries of abrasive materials such as rubbing compounds or polishing compounds.

Before applying a coating composition of the present invention as a primer and/or a metal pretreatment, the metal substrate to be coated may first be cleaned to remove grease, dirt, or other extraneous matter. Conventional cleaning procedures and materials may be employed. These materials could include, for example, mild or strong alkaline cleaners, such as those that are commercially available. Examples include BASE Phase Non-Phos or BASE Phase #6, both of which are available from PPG Industries, Pretreatment and Specialty Products. Other examples include ALK-660, ED-500, both of which are available from PPG Industries, Aerospace Coatings Products. The application of such cleaners may be followed and/or preceded by a water rinse.

The metal surface may then be rinsed with an aqueous acidic solution after cleaning with the alkaline cleaner and before contact with the present coating composition. Examples of suitable rinse solutions include mild or strong acidic cleaners, such as the dilute nitric acid solutions commercially available. Examples include AC-5, AC-12, and EAC-8, all of which are available from PPG Industries, Aerospace Coatings Products. Combination cleaning/abrading solutions can also be used.

The coating compositions of the present invention may be prepared by any of a variety of methods. For example, in certain embodiments, the previously described corrosion resisting magnesium oxide and amino acid particles are added at any time during the formulation of a coating composition comprising a film-forming resin, so long as they form a stable dispersion in a film-forming resin. Coating compositions of the present invention can be prepared by first mixing a film-forming resin, the previously described corrosion resisting particles, pigments, fillers and diluents, such as organic solvents and/or water, dispersing the mixture with a high speed disperser at 1000 to 2000 RPM for 10 to 30 minutes, and then passing the dispersion through a paint mill to achieve grinding fineness of 5 plus as checked with a grinding gauge. It will be appreciated that the present coatings are distinct from solutions comprising magnesium oxide and/or amino acids, in that the present coatings form a film while a solution, if applied to a substrate, has little or no integrity. Applicants have surprisingly discovered the additive, if not synergistic, effect on improving corrosion resistance when using magnesium oxide and amino acid together in a coating.

The coating compositions of the present invention may be applied to a substrate by known application techniques, such as dipping or immersion, spraying, intermittent spraying, dipping followed by spraying, spraying followed by dipping, brushing, or by roll-coating. Usual spray techniques and equipment for air spraying and electrostatic spraying, either manual or automatic methods, can be used. While the coating compositions of the present invention can be applied to various substrates, such as wood, glass, cloth, plastic, foam, including elastomeric substrates and the like, in many cases, the substrate comprises a metal such as those discussed above.

In certain embodiments of the coating compositions of the present invention, after application of the composition to the substrate, a film is formed on the surface of the substrate by driving solvent, i.e., organic solvent and/or water, out of the film by heating or by an air-drying period. Suitable drying conditions will depend on the particular composition and/or application, but in some instances a drying time of from about 1 to 5 minutes at a temperature of about 70 to 250°F (27 to 121°C) will be sufficient. More than one coating layer of the present composition may be applied if desired. Usually between coats, the previously applied coat is flashed; that is, exposed to ambient conditions for the desired amount of time. In certain embodiments, the thickness of the coating is from 0.1 to 3 mils (2.5 to 75 microns), such as 0.2 to 2.0 mils (5.0 to 50 microns). The coating composition may then be heated. In the curing operation, solvents are driven off and crosslinkable components of the composition, if any, are crosslinked. The heating and curing operation is sometimes carried out at a temperature in the range of from 70 to 250 °F (27 to 121 °C) but, if needed, lower or higher temperatures may be used. As noted previously, the coatings of the present invention may also cure without the addition of heat or a drying step.

In certain embodiments of the present invention, after application of the present coating composition to the substrate, a topcoat is applied on the top of the present coating if a multi-layer coating system is desired. Usually between coats, the previously applied coat is flashed. In certain embodiments, the thickness of the topcoat coating is from 0.5 to 4 mils (12.5 to 100 microns), such as 1.0 to 3.0 mils (25 to 75 microns). The coating composition may then be heated. In the curing operation, solvents are driven off and crosslinkable components of the composition, if any, are crosslinked. The heating and curing operation is sometimes carried out at a temperature in the range of from 70 to 250°F (27 to 121°C) but, if needed, lower or higher temperatures may be used. In certain embodiments, the present coating composition is applied and a topcoat applied thereto "wet-on-wet". Alternatively, the present coating composition can be cured before application of one or more additional coating layers.

Coil coatings, having wide application in many industries, are also within the scope of the present invention.

As used herein, unless otherwise expressly specified, all numbers such as those expressing values, ranges, amounts or percentages may be read as if prefaced by the word "about", even if the term does not expressly appear. Also, any numerical range recited herein is intended to include all sub-ranges subsumed therein. Singular encompasses plural and vice versa. For example, although reference is made herein to "an" amino acid, "a" film forming resin, and "a" crosslinker, one or more of each of these and any other components can be used. As used herein, the term "polymer" refers to oligomers and both homopolymers and copolymers, and the prefix "poly" refers to two or more. Including and like terms means including, but not limited to. When ranges are given, any endpoints of those ranges and/or numbers within those ranges can be combined with the scope of the present invention.

### EXAMPLES

The following examples are intended to illustrate the invention, and should not be construed as limiting the invention in any way.

**TABLE 1 provides a description of materials used in preparation of the examples.**

| **Component** | **Description** | **Supplier** |
|---|---|---|
| ANCAMIDE 2569 | Polyamine curing agent | Air Products |
| ANCAMINE 2432 | Polyamine curing agent | Air Products |
| ANCAMINE K54 | Catalyst | Air Products |
| TI-PURE R-706-11 | Titanium Dioxide | DuPont |
| RAVEN 14 | Carbon black | Columbian Chemicals Company |
| Blanc Fix (Micro) | Barium Sulfate | Sachtleben Chemie GmbH |
| MIN-U-SIL 5 | Fine Ground Silica | US Silica |
| GASIL IJ35 | Fine Particle Silica | Ineos Silicas America |
| OXSOL 100 | 4-chloro trifluoromethylbenzene | Rhodia |
| EPIKOTE 880 | Bisphenol A / epichlorohydrin resin | Momentive |
| EPON TM811 | Modified Epoxy resin | Momentive |
| SILQUEST A187 | Epoxy-silane | Momentive |
| BENTONE SD-2 | Bentonite Clay | Elementis Specialties |
| Nano Magnesium Oxide | MgO: 20nm ave. particle size, 50m²/g surface area | Nano Structured and Amorphous Materials |
| MAGCHEM 200AD | MgO: 1micron ave. particle size, 180m²/g surface area | Martin Marietta Magnesia Specialties |
| MAGCHEM 10-325 | MgO: 10 micron ave. particle size, 3m²/g surface area | Martin Marietta Magnesia Specialties |
| MAGLITE Y | MgO: <10 micron ave. particle size, 55m²/g surface area | HallStar |
| L-histidine | Reagent Plus ≥99% | Aldrich |
| L-arginine | Reagent Grade ≥98% | Aldrich |
| L-cysteine | ≥97% | Aldrich |
| L-tryptophan | ≥98.5% | Fisher Scientific |
| L-tyrosine | ≥98.5% | Fisher Scientific |
| DESOPRIMECA7502B | CA7502 Activator Component | PPG Aerospace / PRC Desoto |
| Dispersing media | Part #74582 minimum 85% Al₂O₃ (16 to 20 mesh) | Coors Tek |
| DESOGEL EAP12 | Solgel Pretreatment | PPG Aerospace / PRC Desoto |
| Elderado ALK-660 | Alkaline cleaner | PPG Aerospace Surface Solutions |
| RIDOLENE 298 | Alkaline cleaner | Henkel |
| TURCO 6/16 Deoxidizer | Aluminum surface etching solution - Nitric Acid based | Henkel |
| ALODINE 1200S | Chromated Conversion Coating | Henkel |
| Elderado ALK-660 | Alkaline Cleaner | PPG Aerospace / PRC Desoto |
| EAC-8 | Acidic Brightener | PPG Aerospace / PRC Desoto |
| DESOGEL EAP-12 | Chrome-free Pretreatment | PPG Aerospace / PRC Desoto |
| ACT Bondrite 1000 P-60 | Bondrite 1000 iron phosphate spray treated cold-rolled steel treated with Parcolene 60 chrome sealer; Item #10409 | ACT Test Panels LLC |
| ACT Bondrite 1000 DIW | Bondrite 1000 iron phosphate spray treated cold-rolled steel rinsed with deionized water; Item #48095 | ACT Test Panels LLC |
| ACT Bondrite 1000 P99x | Bondrite 1000 iron phosphate spray treated cold-rolled steel treated with Parcolene 99x non-chrome sealer and rinsed with deionized water; Item #40821 | ACT Test Panels LLC |
| DESMODUR N 3300A | Aliphatic Polyisocyanate Crosslinker | Bayer Material Science |
| Eastman C11 Ketone | | Eastman Chemical Co. |
| DISPERBYK-2155 | Pigment Dispersant | BYK Chemie |
| CINQUASIA Magenta L | Organic Red Pigment | BASF |
| KROMA RO-3097 | Red Iron Oxide Pigment | Elementis |
| CINILEX DDP SR1C | Organic Red Pigment | Clinic Chemicals |
| CINQUASIA Magenta 4520 | Organic Red Pigment | BASF |
| Poly(butylacrylate) | Polyacrylate Flow Additive | PPG Industries, Inc. |
| DYNOADD F-707 | Polyacrylate Flow Additive | Dynea |
| BYK-306 | Silicone Anti-Crater Additive | BYK Chemie |
| EVERSORB 93 | Hindered Amine Light Stabilizer | Everlight Chemical |
| EVERSORB 74 | Benzotriazole UV absorber | Everlight Chemical |
| Eastman 2-Ethylhexanoic Acid | Aliphatic Carboxylic Acid | Eastman Chemical Co. |
| SHIELDEX AC-3 | Calcium ion exchanged amorphous silica | Grace Davison |
| HALOX 550 WF | Organic-inorganic sol-gel corrosion inhibitor | Halox Pigments |

For all examples, amounts given for each material are in grams by weight.

### Examples 1-10

Coating examples were prepared as described below using the materials identified in Table 2. In these examples, coatings were prepared with no inhibitor, nano magnesium oxide only, amino acids only and nano magnesium oxide/amino acids.

**TABLE 2: No inhibitor vs. nanoMgO only vs. Amino acids only vs. nanoMgO/Amino acids**

| **Material** | **Ex 1** | **Ex 2** | **Ex 3** | **Ex 4** | **Ex 5** | **Ex 6** | **Ex 7** | **Ex 8** | **Ex 9** | **Ex 10** |
|---|---|---|---|---|---|---|---|---|---|---|
| **Base Component** | | | | | | | | | | |
| ANCAMIDE 2569 | 25.7 | 25.7 | 25.7 | 25.7 | 25.7 | 25.7 | 25.7 | 25.7 | 25.7 | 25.7 |
| ANCAMINE 2432 | 17.2 | 17.2 | 17.2 | 17.2 | 17.2 | 17.2 | 17.2 | 17.2 | 17.2 | 17.2 |
| ANCAMINE K-54 | 1.6 | 1.6 | 1.6 | 1.6 | 1.6 | 1.6 | 1.6 | 1.6 | 1.6 | 1.6 |
| n-Butyl Alcohol | 44.0 | 44.0 | 44.0 | 44.0 | 44.0 | 44.0 | 44.0 | 44.0 | 44.0 | 44.0 |
| Xylene | 8.0 | 8.0 | 8.0 | 8.0 | 8.0 | 8.0 | 8.0 | 8.0 | 8.0 | 8.0 |
| Ti-PURE R-706-11 | 22.5 | 22.5 | 22.5 | 22.5 | 22.5 | 22.5 | 22.5 | 22.5 | 22.5 | 22.5 |
| RAVEN 14 | 0.1 | 0.1 | 0.1 | 0.1 | 0.1 | 0.1 | 0.1 | 0.1 | 0.1 | 0.1 |
| Blanc-Fix (Micro) | 34.3 | 34.3 | 34.3 | 34.3 | 34.3 | 34.3 | 34.3 | 34.3 | 34.3 | 34.3 |
| MIN-U-SIL 5 | 37.6 | 37.6 | 37.6 | 37.6 | 37.6 | 37.6 | 37.6 | 37.6 | 37.6 | 37.6 |
| GASIL IJ35 | 6.2 | 6.2 | 6.2 | 6.2 | 6.2 | 6.2 | 6.2 | 6.2 | 6.2 | 6.2 |
| Acetone | 9.5 | 13.8 | 9.5 | 9.5 | 9.5 | 13.8 | 13.8 | 13.8 | 13.8 | 13.8 |
| OXSOL 100 | 15.8 | 23.0 | 15.8 | 15.8 | 15.8 | 23.0 | 23.0 | 23.0 | 23.0 | 23.0 |
| Nano Magnesium Oxide | - | 19.5 | - | - | - | 19.5 | 19.5 | 19.5 | 19.5 | 19.5 |
| L-Arginine | - | - | 4.0 | - | - | 4.0 | - | - | - | - |
| L-Histidine | - | - | - | 4.0 | - | - | 4.0 | - | - | - |
| L-Cysteine | - | - | - | - | 4.0 | - | - | 4.0 | - | - |
| L-Tryptophan | - | - | - | - | - | - | - | - | 4.0 | - |
| L-Tyrosine | - | - | - | - | - | - | - | - | - | 4.0 |
| Total | 222.5 | 253.5 | 226.5 | 226.5 | 226.5 | 257.5 | 257.5 | 257.5 | 257.5 | 257.5 |
| | | | | | | | | | | |

| **Activator Component** | | | | | | | | | | |
|---|---|---|---|---|---|---|---|---|---|---|
| DESOPRIME CA7502B | 172.0 | 172.0 | 172.0 | 172.0 | 172.0 | 172.0 | 172.0 | 172.0 | 172.0 | 172.0 |
| | | | | | | | | | | |
| Total Blended Weight | 394.5 | 425.5 | 398.5 | 398.5 | 398.5 | 429.5 | 429.5 | 429.5 | 429.5 | 429.5 |

For the base components of Examples 1-10, all materials were weighed and placed into glass jars. Dispersing media was then added to each jar at a level equal to approximately 35% of the total weight of the base component materials. The jars were sealed with lids and then placed on a Lau DAS 200 Dispersing Unit (Lau GmbH) with a dispersion time of 3 hours. All final dispersions had Hegman gauge readings greater than 7. Prior to coating application, the corresponding amounts of base component and activator component shown for each example in TABLE 2 were combined, mixed thoroughly and given an induction time between 30 and 60 minutes prior to application. The coatings of Examples 1-10 were spray applied onto 2024T3 aluminum alloy substrate panels to a dry film thickness of between 0.7 to 1.2 mils using an air atomized spray gun. Prior to coating application, the substrate panels were cleaned using an acetone wipe followed by wet abrading using SCOTCHBRITE 7448 ultrafine pad to produce a water-break free surface. Panels were rinsed thoroughly with water and allowed to dry. A final wipe with methyl ethyl ketone was performed prior to coating application.

The test panels coated with coating Examples 1-10 were allowed to age under ambient conditions for a minimum of 7 days, after which the panels were inscribed with a 3.75in. by 3.75in. "X" that was scribed into the panel surface to a sufficient depth to penetrate any surface coating and to expose the underlying metal. The scribed coated test panels were then placed into a 5% sodium chloride neutral salt spray cabinet according to ASTM B117 (exception: pH & salt concentration checked weekly as opposed to daily).

The ratings shown in TABLE 3 were at 500 hours of exposure for Examples 1-8 and 672 hours of exposure for Examples 9&10. The panels were rated according to the following scale:
**Scribe Corrosion:** Lower number rating is better
1 = No corrosion present
2 = Tarnished scribe - no white corrosion present
3 = Light corrosion - some white corrosion products noted (∼25 - 30%)
4 = Corroded scribe >30% white corrosion
5 = Other (anything that might not fit into the above categories - identify in comment section)

**Shiny/Nature of Scribe:** Lower number rating is better
1 = 100 - 90% of scribe is shiny
2 = 89 - 30% of scribe is shiny
3 = 29 - 1% of scribe is shiny
4 = No shine present in scribe

**Blisters:** Lower number rating is better
Total number of blisters adjacent to scribe and away from scribe (i.e. Face) blisters are counted up to 30
**Max. Scribe Blister Size:** Lower number rating is better The size of the largest blister adjacent to the scribe is recorded as:

| | |
|---|---|
| 0 | No scribe blisters are present |
| <1/16" | Largest scribe blister is less than 1/16" diameter |
| >1/16" | Largest scribe blister is between 1/16" and 1/8" diameter |
| >1/8" | Largest scribe blister is greater than 1/8" diameter |

**TABLE 3: Corrosion Test Results for Examples 1-10**

| Example # | Description | Scribe Corr. | Scribe Shine | Scribe Blisters | Face Blisters | Max. Scribe Blister Size |
|---|---|---|---|---|---|---|
| 1 | No inhibitor | 3 | 4 | 25 | 0 | >1/8" |
| 2 | Nano MgO | 3 | 3 | 8 | 1 | <1/16" |
| 3 | L-Arginine | 4 | 3 | >30 | 0 | >1/8" |
| 4 | L-Histidine | 3 | 4 | 18 | 0 | >1/8" |
| 5 | L-Cysteine | 3 | 3 | >30 | 0 | >1/16" |
| 6 | Nano MgO / L-Arginine | 2 | 2 | 2 | 0 | <1/16" |
| 7 | Nano MgO / L-Histidine | 2 | 2 | 0 | 0 | 0 |
| 8 | Nano MgO / L-Cysteine | 2 | 3 | 8 | 0 | <1/16" |
| 9 | Nano MgO / L-Tryptophan | 3 | 4 | 15 | 0 | <1/16" |
| 10 | Nano MgO / L-Tyrosine | 3 | 4 | 5 | 0 | <1/16" |

The corrosion data in TABLE 3 clearly shows that the addition of amino acid alone to a coating containing no other corrosion inhibitor has little effect on scribe corrosion or blistering, that addition of MgO to a coating containing no other corrosion inhibitor produces a slightly positive effect on scribe shine and scribe blister reduction, and that the combination of MgO and amino acid produces a significant improvement in either scribe protection, reduction in number of blisters, blister size reduction, or a combination of these measurements. Thus, the data indicates that the combination of MgO and amino acid produces a much more positive effect on corrosion resistance than either material used alone.

### Examples 11-12

In these examples, two coatings, one with magnesium oxide and one with magnesium oxide and histidine were compared over various substrates and surface preparations.

| **Material** | **Ex 11** | **Ex 12** |
|---|---|---|
| **Base Component** | | |
| ANCAMIDE 2569 | 21.6 | 21.6 |
| ANCAMINE 2432 | 14.4 | 14.4 |
| ANCAMINE K-54 | 1.3 | 1.3 |
| n-Butyl Alcohol | 51.7 | 51.7 |
| Xylene | 6.3 | 6.3 |
| Ti-PURE R-706-11 | 18.9 | 18.9 |
| Acetone | 4.4 | 4.4 |
| OXSOL 100 | 7.2 | 7.2 |
| Nano Magnesium Oxide | 25.4 | 25.4 |
| L-Histidine | - | 4.0 |
| Total | 151.2 | 155.2 |
| | | |

| **Activator Component** | | |
|---|---|---|
| EPON 828 | 55.5 | 55.5 |
| EPON TM8111 | 9.0 | 9.0 |
| Xylene | 3.4 | 3.4 |
| SILQUEST A187 | 1.7 | 1.7 |
| BENTONE SD-2 | 0.9 | 0.9 |
| OXSOL 100 | 66.8 | 66.8 |
| Nano Magnesium Oxide | 26.7 | 26.7 |
| OXSOL 100 | 4.4 | 4.4 |
| Acetone | 7.2 | 7.2 |
| Total | 175.6 | 175.6 |
| | | |
| Total Blended Weight | 326.8 | 330.8 |

For the base components of Examples 11 and 12, all materials were weighed and placed into glass jars. Dispersing media was then added to each jar at a level equal to approximately 45% of the total weight of the base component materials. For the activator components for the examples, all materials were weighed and placed into glass jars. Dispersing media was then added to each jar at a level equal to approximately 50% of the total weight of the activator component materials. The jars were sealed with lids and then placed on a Lau Dispersing Unit with a dispersion time of 3 hours. All final dispersions had Hegman gauge readings greater than 7. Prior to coating application, the corresponding ratios of base component and activator components shown in TABLE 4 were blended together, thoroughly mixed and given an induction time between 30 and 60 minutes prior to application.

The coatings of Examples 11 and 12 were spray applied onto aluminum alloy substrate panels to a dry film thickness of between 0.7 to 1.2 mils using an air atomized spray gun. Prior to coating application, the aluminum alloy substrate panels were prepared in one of the following three substrate scenarios:
**Scenario 1:** 2024T3 aluminum alloy panels were cleaned using an acetone wipe followed by wet abrading using SCOTCHBRITE 7448 ultrafine pad using ALK-660 alkaline cleaner to produce a water-break free surface. Panels were rinsed thoroughly with water and allowed to dry. A final wipe with acetone was performed prior to coating application.
**Scenario 2:** 2024T3 clad aluminum alloy panels were abraded and cleaned as in scenario 1 and then pretreated with DESOGEL EAP12 using the spray application method described in the supplier's technical data sheet. The pretreated panels were dried under ambient conditions for between 2 to 4 hours prior to coating application.
**Scenario 3:** 2024T3 aluminum alloy panels were cleaned using an acetone wipe. Panels were immersed in RIDOLENE 298 for 2 minutes at 130°F; followed by a 1 minute immersion in tap water; followed by 2'30" immersion in TURCO 6/16 deoxidizer at ambient conditions; followed by a 1 minute immersion in tap water; followed by 2'30" immersion ALODINE 1200S solution; followed by a 1 minute immersion in deionized water and a spray rinse with deionized water; panels were allowed to dry under ambient conditions for 2-4 hours prior to coating application.

The test panels coated with coating Examples 11 and 12 were allowed to age under ambient conditions for a minimum of 7 days, after which the panels were inscribed with a 3.75in. by 3.75in. "X" that was scribed into the panel surface to a sufficient depth to penetrate any surface coating and to expose the underlying metal. The scribed coated test panels were then placed into a 5% sodium chloride neutral salt spray cabinet according to ASTM B117 (exception: pH & salt concentration checked weekly as opposed to daily).

The ratings shown in TABLE 5 were at 2016 hours of exposure. The panels were rated according to the following scale:
**Scribe Corrosion:** Lower rating number is better
Rating is 0 to 100 and number represents percent of scribe area exhibiting visible corrosion.
**Shiny/Nature of Scribe:** Lower rating number is better
Rating is 0 - 100 and number represents percent of scribe which is dark/tarnished scribe.
**Blisters:** Lower rating number is better
Total number of blisters adjacent to scribe and away from scribe (i.e. Face) blisters are counted up to 30
**Max. Scribe Blister Size:** Lower rating number is better The size of the largest blister adjacent to the scribe is recorded as:

| | |
|---|---|
| 0 | No scribe blisters are present |
| <1/16" | Largest scribe blister is less than 1/16" diameter |
| >1/16" | Largest scribe blister is between 1/16" and 1/8" diameter |
| >1/8" | Largest scribe blister is greater than 1/8" diameter |

**TABLE 5: Corrosion Test Results for Examples 11 & 12**

| Example # | Description | Substrate / Pretreatment | Scribe Corr. | Scribe Shine | Scribe Blisters | Face Blisters | Max. Scribe Blister Size |
|---|---|---|---|---|---|---|---|
| 11 | Nano MgO | 2024T3 /none | 20 | 85 | 7 | 0 | >1/16" |
| 11 | Nano MgO | 2024T3 clad + solgel | 20 | 90 | >30 | 0 | <1/16" |
| 11 | Nano MgO | 2024T3 / ALODINE 1200 | 10 | 85 | 2 | 0 | <1/16" |
| 12 | Nano MgO / L-Histidine | 2024T3 /none | 5 | 85 | 0 | 0 | 0 |
| 12 | Nano MgO / L-Histidine | 2024T3 clad + solgel | 5 | 85 | 0 | 5 | 0 |
| 12 | Nano MgO / L-Histidine | 2024T3 / ALODINE 1200 | 0 | 80 | 0 | 0 | 0 |

The corrosion data in TABLE 5 clearly shows that the combination of MgO and the amino acid L-histidine has improved scribe corrosion protection and reduced blistering than MgO alone over all three of the tested substrate / surface treatment scenarios.

### Examples 13-18

In these examples, coatings made from various sources and sizes of MgO, alone and with L-histidine, were compared on two different substrates/treatments.

**TABLE 6**

| **Material** | **Ex 13** | **Ex 14** | **Ex 15** | **Ex 16** | **Ex 17** | **Ex 18** |
|---|---|---|---|---|---|---|
| **Base Component** | | | | | | |
| ANCAMIDE 2569 | 21.6 | 21.6 | 21.6 | 21.6 | 21.6 | 21.6 |
| ANCAMINE 2432 | 14.4 | 14.4 | 14.4 | 14.4 | 14.4 | 14.4 |
| ANCAMINE K-54 | 1.3 | 1.3 | 1.3 | 1.3 | 1.3 | 1.3 |
| n-Butyl Alcohol | 51.7 | 51.7 | 51.7 | 51.7 | 51.7 | 51.7 |
| Xylene | 6.3 | 6.3 | 6.3 | 6.3 | 6.3 | 6.3 |
| Ti-PURE R-706-11 | 18.9 | 18.9 | 18.9 | 18.9 | 18.9 | 18.9 |
| Acetone | 4.5 | 4.5 | 4.5 | 4.5 | 4.5 | 4.5 |
| OXSOL 100 | 7.4 | 7.4 | 7.4 | 7.4 | 7.4 | 7.4 |
| MAGCHEM 200AD MgO | 25.4 | 25.4 | - | - | - | - |
| MAGLITE Y MgO | - | - | 21.0 | 21.0 | - | - |
| MAGCHEM 10-325 MgO | - | - | - | - | 52.0 | - |
| L-Histidine | - | 4.0 | - | 4.0 | - | 4.0 |
| Total | 151.5 | 155.5 | 147.1 | 151.1 | 178.1 | 182.1 |
| | | | | | | |

| **Activator Component** | | | | | | |
|---|---|---|---|---|---|---|
| EPON 828 | 55.5 | 55.5 | 55.5 | 55.5 | 55.5 | 55.5 |
| EPON TM8111 | 9.0 | 9.0 | 9.0 | 9.0 | 9.0 | 9.0 |
| Xylene | 18.4 | 18.4 | 3.4 | 3.4 | 3.4 | 3.4 |
| SILQUEST A187 | 1.7 | 1.7 | 1.7 | 1.7 | 1.7 | 1.7 |
| OXSOL 100 | 66.7 | 66.7 | 102.3 | 109.2 | 66.8 | 66.8 |
| MAGCHEM 200AD MgO | 26.6 | 26.6 | - | - | - | - |
| MAGLITE Y MgO | - | - | 21.0 | 21.0 | - | - |
| MAGCHEM 10-325 MgO | - | - | - | - | 23.0 | 23.0 |
| OXSOL 100 | 4.5 | 4.5 | 4.5 | 4.5 | 4.5 | 4.5 |
| Acetone | 7.4 | 7.4 | 7.4 | 7.4 | 7.4 | 7.4 |
| Total | 190.0 | 190.0 | 204.8 | 211.7 | 171.3 | 171.3 |
| | | | | | | |
| Total Blended Weight | 341.5 | 345.5 | 351.9 | 362.8 | 349.4 | 353.4 |

For the base components of Examples 13-18, all materials were weighed and placed into glass jars. Dispersing media was then added to each jar at a level equal to approximately 50% of the total weight of the base component materials. For the activator components for the examples, all materials were weighed and placed into glass jars. Dispersing media was then added to each jar at a level equal to approximately 50% of the total weight of the activator component materials. The jars were sealed with lids and then placed on a Lau Dispersing Unit with a dispersion time of 3 hours. All final dispersions had Hegman gauge readings greater than 7. Prior to coating application, the corresponding ratios of base component and activator components shown in TABLE 6 were blended together , thoroughly mixed and given an induction time between 30 and 60 minutes prior to application.

The coatings of Examples 13-18 were spray applied onto aluminum alloy substrate panels to a dry film thickness of between 0.7 to 1.2 mils using an air atomized spray gun. Prior to coating application, the aluminum alloy substrate panels were prepared in one of the following two substrate scenarios:
**Scenario 1:** 2024T3 aluminum alloy panels were cleaned using an acetone wipe followed by wet abrading using SCOTCHBRITE 7448 ultrafine pad using EAC-8 acidic cleaner to produce a water-break free surface. Panels were rinsed thoroughly with water and allowed to dry.
**Scenario 2:** 2024T3 clad aluminum alloy panels were abraded and cleaned as in scenario 1 and then pretreated with DESOGEL EAP12 using the spray application method described in the supplier technical data sheet. The pretreated panels were dried under ambient conditions for between 2 to 4 hours prior to coating application.

The test panels coated with coating examples 13-18 were allowed to age under ambient conditions for a minimum of 7 days, after which the panels were inscribed with a 3.75in. by 3.75in. "X" that was scribed into the panel surface to a sufficient depth to penetrate any surface coating and to expose the underlying metal. The scribed coated test panels were then placed into a 5% sodium chloride neutral salt spray cabinet according to ASTM B117 (exception: pH & salt concentration checked weekly as opposed to daily).

The ratings shown in TABLE 7 were at 1008 hours of exposure for examples 13-14, 1104 hours of exposure time for examples 15-16, and 504 hours of exposure time for examples 17-18. The panels were rated according to the following scale:
**Scribe Corrosion:** Lower rating number is better
Rating is 0 to 100 and number represents percent of scribe area exhibiting visible corrosion.
**Shiny/Nature of Scribe:** Lower rating number is better
Rating is 0 - 100 and number represents percent of scribe which is dark/tarnished scribe.
**Blisters:** Lower rating number is better
Total number of blisters adjacent to scribe and away from scribe (i.e. Face) blisters are counted up to 30
**Max. Scribe Blister Size:** Lower rating number is better
The size of the largest blister adjacent to the scribe is recorded as:

| | |
|---|---|
| 0 | No scribe blisters are present |
| <1/16" | Largest scribe blister is less than 1/16" diameter |
| >1/16" | Largest scribe blister is between 1/16" and 1/8" diameter |
| >1/8" | Largest scribe blister is greater than 1/8" diameter |

**TABLE 7: Corrosion Test Results for Examples 13, 14, 15, 16, 17, 18**

| EX. # | Description | Substrate / Pretreatment | Scribe Corr. | Scribe Shine | Scribe Blisters | Face Blisters | Max. Scribe Blister Size |
|---|---|---|---|---|---|---|---|
| 13 | MAGCHEM 200AD MgO | 2024T3 /none | 15 | 90 | 18 | 0 | >1/8" |
| 13 | MAGCHEM 200AD MgO | 2024T3 clad + solgel | 20 | 85 | 31 | 0 | <1/16" |
| 14 | MAGCHEM 200AD MgO / L-histidine | 2024T3 /none | 10 | 85 | 9 | 0 | <1/16" |
| 14 | MAGCHEM 200AD MgO / L-histidine | 2024T3 clad + solgel | 15 | 80 | 31 | 0 | <1/16" |
| 15 | MAGLITE Y MgO | 2024T3 /none | 20 | 95 | 2 | 0 | <1/16" |
| 15 | MAGLITE Y MgO | 2024T3 clad + solgel | 15 | 90 | 31 | 2 | <1/16" |
| 16 | MAGLITE Y MgO / L-histidine | 2024T3 /none | 5 | 85 | 0 | 0 | 0 |
| 16 | MAGLITE Y MgO / L-histidine | 2024T3 clad + solgel | 10 | 85 | 3 | 3 | <1/16" |
| 17 | MAGCHEM 10-325 MgO | 2024T3 /none | 15 | 85 | 4 | 0 | >1/16" |
| 17 | MAGCHEM 10-325 MgO | 2024T3 clad + solgel | 15 | 70 | 20 | 0 | <1/16" |
| 18 | MAGCHEM 10-325 MgO / L-histidine | 2024T3 /none | 5 | 70 | 3 | 0 | <1/16" |
| 18 | MAGCHEM 10-325 MgO / L-histidine | 2024T3 clad + solgel | 5 | 70 | 5 | 0 | <1/16" |

The corrosion data in TABLE 7 clearly shows for all 3 of the magnesium oxide sources of varying particle size and surface area that the addition of the amino acid L-histidine measurably improved scribe corrosion protection and/or reduced blistering over both substrate scenarios as compared to the magnesium oxides by themselves.

### Examples 19-24

Coating Examples 19-24 were prepared as described below using the materials identified in TABLE 8.

**TABLE 8:**

| **Material** | **Ex 19** | **Ex 20** | **Ex 21** | **Ex 22** | **Ex 23** | **Ex 24** |
|---|---|---|---|---|---|---|
| **Base Component 1** | | | | | | |
| Polyester polyol resin* | 28.0 | 28.0 | 28.0 | 28.0 | 28.0 | 28.0 |
| n-Butyl Acetate | 8.0 | 8.0 | 8.0 | 8.0 | 8.0 | 8.0 |
| Solvesso 100 Fluid | 5.7 | 5.7 | 5.7 | 5.7 | 5.7 | 5.7 |
| Propylene Glycol Monomethyl Ether Acetate | 2.4 | 2.4 | 2.4 | 2.4 | 2.4 | 2.4 |
| Ethyl 3-Ethoxypropionate | 1.6 | 1.6 | 1.6 | 1.6 | 1.6 | 1.6 |
| Eastman C11 Ketone | 0.8 | 0.8 | 0.8 | 0.8 | 0.8 | 0.8 |
| Acetone | 6.7 | 6.7 | 6.7 | 6.7 | 6.7 | 6.7 |
| DISPERBYK-2155 | 1.1 | 1.1 | 1.1 | 1.1 | 1.1 | 1.1 |
| CINQUASIA Magenta L 4530 | 1.3 | 1.3 | 1.3 | 1.3 | 1.3 | 1.3 |
| KROMA RO-3097 | 5.8 | 5.8 | 5.8 | 5.8 | 5.8 | 5.8 |
| CINILEX DDP SR1C | 3.9 | 3.9 | 3.9 | 3.9 | 3.9 | 3.9 |
| CINQUASIA Magenta 4520 | 0.5 | 0.5 | 0.5 | 0.5 | 0.5 | 0.5 |
| MAGCHEM 200AD | 1.7 | 1.7 | 1.7 | 1.7 | 1.7 | 1.7 |
| Poly(butylacrylate) | 0.2 | 0.2 | 0.2 | 0.2 | 0.2 | 0.2 |
| DYNOADD F-707 | 0.1 | 0.1 | 0.1 | 0.1 | 0.1 | 0.1 |
| L-histidine | - | 0.6 | - | - | - | - |
| L-Tryptophan | - | - | 0.6- | **-** | **-** | - |
| L-Tyrosine | - | - | - | 0.6 | - | - |
| L-Phenylalanine | - | - | - | - | 0.6 | - |
| L-Methionine | - | - | - | - | - | 0.6 |
| BYK-306 | 0.2 | 0.2 | 0.2 | 0.2 | 0.2 | 0.2 |
| EVERSORB 93 | 1.1 | 1.1 | 1.1 | 1.1 | 1.1 | 1.1 |
| EVERSORB 74 | 0.6 | 0.6 | 0.6 | 0.6 | 0.6 | 0.6 |
| Eastman 2-Ethylhexanoic Acid | 1.1 | 1.1 | 1.1 | 1.1 | 1.1 | 1.1 |
| SHIELDEX AC-3 | 3.1 | 3.1 | 3.1 | 3.1 | 3.1 | 3.1 |
| HALOX 550 WF | 1.7 | 1.7 | 1.7 | 1.7 | 1.7 | 1.7 |
| | | | | | | |

| **Activator Component** | | | | | | |
|---|---|---|---|---|---|---|
| DESMODUR N 3300A | 24.0 | 24.0 | 24.0 | 24.0 | 24.0 | 24.0 |
| | | | | | | |
| Total Blended Weight | 99.6 g | 100.2 g | 100.2 g | 100.2 g | 100.2 g | 100.2 g |

| | | | | | | |
|---|---|---|---|---|---|---|
| *from PPG Industries, Inc. | | | | | | |

For the base components of Examples 19 and 24, all materials were weighed and placed into glass jars. Dispersing media was then added to each jar at a level equal to approximately 35% of the total weight of the base component materials. The jars were sealed with lids and then placed on a Lau DAS 200 Dispersing Unit (Lau GmbH) with a dispersion time of 4 hours. All final dispersions had Hegman gauge readings greater than 7. Immediately prior to coating application, the corresponding amounts of base component and activator component shown for each example in TABLE 8 were combined and mixed thoroughly. The coatings of Examples 19 and 20 were spray applied onto three different pretreated cold-rolled steel panels (Bondrite B1000 P-60, Bondrite B1000 DIW, Bondrite B1000 P-99X DIW) to a dry film thickness of between 1.5 to 2.0 mils using an air atomized spray gun. Panels were used as supplied. The test panels coated with coating Examples 19 and 20 were allowed to age under ambient conditions for a minimum of 7 days, after which the panels were inscribed with a single 3.75 inch scribe into the panel surface to a sufficient depth to penetrate any surface coating and to expose the underlying metal. The scribed coated test panels were then placed into a 5% sodium chloride neutral salt spray cabinet according to ASTM B117 (exception: pH & salt concentration checked weekly as opposed to daily).

The ratings shown in TABLE 9 were at 300 hours of exposure. The area around the scribe was scraped using a stainless steel scalpel, applying sufficient force to remove the blistered coating. The panels were rated by the distance in millimeters from the scribed edge to the point of delamination from the substrate after scraping. An average value from eight separate measurements of the scribe creep was determined:

**TABLE 9: Corrosion Test Results for Examples 19 and 20 over Various Cold-Rolled Steel Substrates; Scribe Creep (in mm.)**

| Example # | Description | B1000 DIW | B1000 P-99X DIW | B1000 P-60 |
|---|---|---|---|---|
| 19 | MgO | 2.4 | 3.9 | 3.0 |
| 20 | MgO + L-Histidine | 1.7 | 2.7 | 2.2 |
| 21 | MgO + L-Tryptophan | 1.8 | 3.0 | 2.2 |
| 22 | MgO + L-Tyrosine | 1.5 | 3.1 | 1.6 |
| 23 | MgO + L-Phenylalanine | 1.5 | 2.4 | 2.1 |
| 24 | MgO + L-Methionine | 1.7 | 2.0 | 2.5 |

The corrosion data in TABLE 9 clearly shows that the addition of various amino acid L-histidine to a coating containing MgO provides significantly better corrosion protection over all three cold-rolled steel substrates.

Whereas particular embodiments of this invention have been described above for purposes of illustration, it will be evident to those skilled in the art that numerous variations of the details of the present invention may be made without departing from the invention as defined in the appended claims.

## Claims

1. A coating comprising:
(a) MgO,
(b) an amino acid, and
(c) a film-forming resin.

2. The coating of Claim 1, wherein the MgO has a surface area of at least 10 square meters per gram.

3. The coating of Claim 1, wherein the amino acid comprises an amino acid selected from histidine; arginine; cysteine; cystine; tryptophan; tyrosine; lysine; methionine; and phenylalanine.

4. The coating of Claim 3, wherein the amino acid is histidine and is present in an amount of 0.1 to 10 wt %, preferably 2 to 4 wt %, based on total resin solids.

5. The coating of Claim 1, wherein the coating is a multi-component coating.

6. The coating of Claim 5, wherein one component comprises an epoxy functional resin and another component comprises an amine functional resin.

7. The coating of Claim 1, wherein one component comprises a polyol resin and the other component comprises an isocyanate functional resin.

8. The coating of Claim 6, wherein at least a portion of the MgO and the amino acid are in the component comprising the amine resin.

9. The coating of Claim 1, wherein said coating is substantially free of any of chromium; a rare earth element and praseodymium oxide.

10. The coating of Claim 1, wherein the amino acid is oligomeric.

11. The coating of Claim 1, wherein the coating cures at ambient conditions.

12. A method of coating a substrate comprising applying to at least a portion of the substrate the coating of Claim 1.

13. A substrate coated according to Claim 12.

14. The substrate of Claim 13, wherein the substrate comprises aluminum.

15. The substrate of Claim 13, wherein the substrate comprises steel.

## Patentansprüche

1. Beschichtung enthaltend:
(a) MgO,
(b) eine Aminosäure und
(c) ein filmbildendes Harz.

2. Beschichtung nach Anspruch 1, wobei das MgO eine Oberfläche von wenigstens 10 Quadratmeter pro Gramm aufweist.

3. Beschichtung nach Anspruch 1, wobei die Aminosäure eine Aminosäure umfasst, ausgewählt aus Histidin, Arginin, Cystein, Cystin, Tryptophan, Tyrosin, Lysin, Methionin und Phenylalanin.

4. Beschichtung nach Anspruch 3, wobei die Aminosäure Histidin ist und in einer Menge von 0,1 bis 10 Gew.-%, vorzugsweise 2 bis 4 Gew.-%, bezogen auf Gesamtharzfeststoffe, vorhanden ist.

5. Beschichtung nach Anspruch 1, wobei die Beschichtung eine Mehrkomponentenbeschichtung ist.

6. Beschichtung nach Anspruch 5, wobei eine Komponente ein epoxyfunktionelles Harz enthält und eine andere Komponente ein aminofunktionelles Harz enthält.

7. Beschichtung nach Anspruch 1, wobei eine Komponente ein Polyolharz enthält und die andere Komponente ein isocyanatfunktionelles Harz enthält.

8. Beschichtung nach Anspruch 6, wobei wenigstens ein Teil des MgO und der Aminosäure in der Komponente vorhanden sind, die das Aminharz enthält.

9. Beschichtung nach Anspruch 1, wobei diese Beschichtung im Wesentlichen frei von einem von Chrom, Seltenerdelement und Praseodymoxid ist.

10. Beschichtung nach Anspruch 1, wobei die Aminosäure oligomer ist.

11. Beschichtung nach Anspruch 1, wobei die Beschichtung bei Umgebungsbedingungen härtet.

12. Verfahren zur Beschichtung eines Substrats, umfassend Aufbringen der Beschichtung nach Anspruch 1 auf wenigstens einen Teil des Substrats.

13. Substrat beschichtet gemäß Anspruch 12.

14. Substrat nach Anspruch 13, wobei das Substrat Aluminium umfasst.

15. Substrat nach Anspruch 13, wobei das Substrat Stahl umfasst.

## Revendications

1. Revêtement comprenant
a) de l'oxyde de magnésium,
b) un acide aminé,
c) et une résine filmogène.

2. Revêtement conforme à la revendication 1, dans lequel l'oxyde de magnésium présente une aire spécifique d'au moins 10 mètres carrés par gramme.

3. Revêtement conforme à la revendication 1, dans lequel l'acide aminé comprend un acide aminé choisi parmi les suivants : histidine, arginine, cystéine, cystine, tryptophane, tyrosine, lysine, méthionine et phényl-alanine.

4. Revêtement conforme à la revendication 3, dans lequel l'acide aminé est de l'histidine, qui se trouve présente en une proportion de 0,1 à 10 % en poids, et de préférence de 2 à 4 % en poids, par rapport à la quantité totale de solides dans la résine.

5. Revêtement conforme à la revendication 1, lequel revêtement est un revêtement multi-composant.

6. Revêtement conforme à la revendication 5, dans lequel un composant comprend une résine à groupes fonctionnels époxy et un autre composant comprend une résine à groupes fonctionnels amine.

7. Revêtement conforme à la revendication 1, dans lequel un composant comprend une résine à base de polyol et l'autre composant comprend une résine à groupes fonctionnels isocyanate.

8. Revêtement conforme à la revendication 6, dans lequel au moins une partie de l'oxyde de magnésium et de l'acide aminé se trouvent dans le composant comprenant la résine amine.

9. Revêtement conforme à la revendication 1, lequel revêtement est pratiquement exempt de chrome, des éléments des terres rares et d'oxyde de praséodyme.

10. Revêtement conforme à la revendication 1, dans lequel l'acide aminé se trouve sous forme oligomère.

11. Revêtement conforme à la revendication 1, lequel revêtement durcit dans les conditions ambiantes.

12. Procédé de revêtement d'un substrat, comprenant le fait d'appliquer, sur au moins une partie du substrat, un revêtement conforme à la revendication 1.

13. Substrat revêtu conformément à la revendication 12.

14. Substrat conforme à la revendication 13, lequel substrat comprend de l'aluminium.

15. Substrat conforme à la revendication 13, lequel substrat comprend de l'acier.
